# EUROPEAN PATENT SPECIFICATION

(11) **EP 2 536 638 B1**
(45) Date of publication and mention of the grant of the patent: **26.03.2014**
(21) Application number: 11705673.9
(22) Date of filing: 16.02.2011
(51) Int. Cl.: B65B 61/02, G06K 17/00, G06K 19/00, G06K 19/08, G09F 3/02

(54) **ARTICLE TRACKING METHOD**
VERFAHREN ZUR VERFOLGUNG EINES ARTIKELS
PROCEDE DE REPERAGE D'ARTICLE

(30) Priority: 19.02.2010 GB 201002844
(43) Date of publication of application: 26.12.2012
(60) Divisional application: 13183611.6
(73) Proprietor: Innovia Films Limited, Wigton Cumbria CA7 9BG (GB)
(72) Inventor: STEWART, Robert Laird, Cumbria CA7 9BG (GB); GAVEL, Thierry, 9820 Merelbeke (BE)
(74) Representative: Brand, Thomas Louis
(86) International application number: PCT/GB2011/050307
(87) International publication number: WO 2011/101673

(56) References cited:
- EP-A1- 1 420 381
- EP-A1- 1 953 684
- EP-A1- 2 048 089
- US-B2- 6 766 951

## Description

The present invention generally relates to the tracking and tracing of articles; more particularly to a method of tracking an article using a coded film. A method of protecting an article against tampering and a method of providing anti-counterfeit protection to a genuine article are also disclosed.

Many tracking and tracing techniques of articles exist and are well known. Perhaps the most widely used system is that of barcodes. A barcode represents data in an optical-machine-readable form. Generally, the widths and spaces in a barcode represent different numbers and letters which are decodable by a barcode scanner. The scanned data is communicated to a central database which holds information on the barcode and the company/product to which the barcode is registered. The barcode can be used for stock control and pricing purposes, and for tracking the progress of a product through a supply chain, for example. However, problems are encountered if the barcode fades or is defaced such that it cannot be scanned easily, if at all. Barcodes are printed using standard printing technologies, which can be easily copied. They can, however, be encrypted, particularly 2D barcodes.

An alternative tracking system involves Radio Frequency Identification (RFID). RFID is a technology based on the transmission and reception of radio frequency signals between a transmitter (known as a reader) and a transponder (known as a tag). Generally, the reader sends a signal which is received by the tag; the tag then transmits a response signal that is received by the reader. In this way, the tag and any item to which it is attached may be identified and tracked. However, in addition to RFID technology being relatively expensive, other shortcomings include a limited lifetime if it is battery powered, the strength of the high frequency field can fall-off quickly giving limited read ranges, and ultra-high frequency systems suffer signal loss or attenuation through materials - which can causes poor penetration. RFID is undesirable in the bank note field because of the prejudice against remote scanning capability.

Many years ago, measures were also introduced to prevent unauthorised access to products before being sold or distributed. "Tampering" involves the deliberate altering or adulteration of information, a product, a package, or system. It became necessary to detect when a device or process had been tampered with so that the consumer would immediately realise that the integrity of the device or process may have been compromised. Tamper-evident design is perhaps most common in the area of product packaging and labelling; particularly the pharmaceutical sector where drug identity is vital. Pressure-sensitive labels, for instance, can be employed to seal pharmaceutical packaging such that a "void" mark remains on the packaging when the label is peeled away on opening. In packaging, tamper-evident closures comprise a frangibly connected tamper-evident ring or a tamper-evident tab, which is normally found on one side of the closure connected by a tear-off. However, pressure-sensitive labels generally do not cover the entire article and so it may still be vulnerable to unauthorised access, in some circumstances.

A further security concern is the counterfeiting of articles such as currency, which has a serious impact on the world's economy. In some countries, paper notes are marked with Ultra-Violet visible ink (widely available commercially) so that counterfeit notes may be detected. In addition, the counterfeiting of consumer goods, and especially cigarettes, perfumes, pharmaceutical products, CDs and DVDs may currently account for as much as an estimated 5 to 7% of world trade in such products. This represents significant losses both for brand owners and potentially for governments. In order to mislead a consumer into believing that a genuine product is being purchased, the packaging of the fake product is made to resemble closely that of the genuine product, or even to reproduce it exactly. Another form of counterfeit prevention includes digital watermarks. However, many of these techniques fail to perform their intended function of preventing counterfeiting because offenders have discovered ways of mimicking the genuine seals so that counterfeit articles appear genuine.

The field of track and trace is becoming increasingly the concern of governmental agencies and IP dependent industries as they seek to protect against black and grey market activities.

EP 2 048 089 discloses a wrapped container of consumer products bearing one or more machine readable indicia, wherein the machine readable indicia are applied to the wrapper. The portion of the wrapper to which the machine readable indicia are applied may be substantially transparent and the surface of the container behind the machine readable indicia substantially neutral.

EP 1 420 381 discloses a method for identifying a cigarette filled packet that has a packing element for the cigarettes as well as a surrounding film. During the packaging production process, a unique code is applied to either the packaging or the surrounding film. Also, during packaging, a unique characteristic of the packing element or surrounding film is measured. The unique measured value is stored with the identifying code in a storage medium thus forming a unique data record.

EP 1 953 684 discloses a machine readable code comprising at least a portion of a graphical indicium, the graphical indicium comprising a random arrangement of spots. At least some of the spots comprising the graphical indicium may have a dimension of less than one micrometre. The spots comprising the graphical indicium may vary in size and/or shape. The portion of the graphical indicium comprising the code may be delimited by a boundary, the boundary may be a temporary boundary which may be generated by a reading machine relative to a fixed trigger point only when the code is being read.

From the discussion that is to follow, it will become apparent how the present invention addresses the aforementioned deficiencies of known constructions whilst providing numerous additional advantages and benefits not hitherto contemplated or possible with known techniques.

According to an aspect of the present invention, there is provided a method of tracking an article, comprising the steps of:
- providing an article;
- providing a transparent, polymeric film for wrapping or labelling the article;
- marking the film with a code;
- defining an area of interest on the article or the film ;
- wrapping the article in the film or labelling the article with the film so that the code at least partially overlays the area of interest to define a tracking zone in the region of the at least partial overlay;
- imaging the positional relationship between the code and the area of interest in the tracking zone of the wrapped or labelled article; and
- storing the imaged data for tracking the article or storing the imaged data for recognition of the article in its untampered state, or storing the imaged data for recognition of the genuine article.

The tracking zone may be considered the area or region in which the code at least partially overlays (or superposes) the area of interest. The tracking zone may be imaged for purposes of identification of the article. It is the relationship between the code and the area of interest which is imaged so that in the event that the relationship changes, this can be detected. For example, the area of interest may be on the article, and the coded film (of the packaging or label) may overlay the area of interest so as to define a tracking zone. If the article packaging/label is disrupted so that the alignment between the code and the area of interest changes, the image of the tracking zone will no longer match the stored image and consequently a tampered or counterfeit article may be identified. The tracking zone image may also serve to track the article by matching it with a stored image.

The combination of defining an area of interest and wrapping an article with a coded film, then recording the image of the tracking zone for future recognition has benefits for tracking the article, protecting the article against tampering and providing anti-counterfeit protection to a genuine article. The above-described method(s) offers a combination of these effects which has not heretofore been possible with known techniques.

Some benefits of the method include that it may be integrated into known current production steps; there are no chemicals or associated waste as would be the case with inks; the codes may be fully integrated into the film; the codes superficially resembles laser marking using more common systems, but may be performed at a higher fidelity. For example, higher security may be provided by the fidelity which is above that found using standard laser processes for bi-axially oriented polypropylene (BOPP) marking. The methods do not ruin a clear film's optical properties. Further, the methods can be performed easily via a print technique. The methods offer a cost effective way of protecting and tracking articles, compared with methods employing pressure-sensitive labels, for instance.

A first layer of security may be provided by encryption of the code. 2-D barcodes, for example, can be printed using standard technology, but by encrypting the code behind the barcode it makes copying not impossible but detectable via the generation of multiple identical codes (or nonsensical codes) that are picked up using the reading and distribution system (i.e. DHL^{™} package tracking).

A second layer of security can be added by making the code awkward to generate in the first place so that the counterfeiter not only has to crack the code, but also has to figure out a way to copy it.

A third layer of obfuscation can be inserted by making the code difficult to see; this would increase the importance of the detection system.

A fourth layer of security can be added by randomly encoding the film; encrypted systems can be cracked and, therefore, copied. Random codes are generated at the point of manufacture and then the generated patterns are captured and converted using an encryption algorithm into a unique code in a database. A randomly generated code cannot be encoded in a predictable sequence and so adds further security.

One inventive aspect of the method(s) described herein (and wrapped article(s) resulting therefrom) is the relationship between the coded film and the area of interest. The area of interest, by way of the tracking zone, will have been imaged and stored on a database. To this stored image may be attributed information such as the article's product name, lot number, price, stock level, and other similar information. A suitable reader can recognise the stored image when scanned so as to properly identify the article. In this way, it is possible to track the article through the supply chain, establish that the article is genuine, and that it has not been tampered with. For example, if the film is peeled away from the article, the relationship between the coded film and the area of interest is altered (or misaligned) such that it would not match the stored image in the database and can thus be identified as having been tampered with or counterfeit.

To re-align the area of interest with the coded film after tampering is a very difficult task, if not impossible. To relocate precisely the coded film in relation to the area of interest may not be possible with the naked eye; thus enhancing the article's defence.

The methods may include a step of measuring the birefringence of a core layer of the film, wherein the film is polymeric.

Birefringence, or double refraction, is a property of materials caused by differences in the refractive indices of the material for the two different polarisations, s- and p-. The resulting effect manifests itself as a rotation of the polarisation angle of light being transmitted through the material; the effect is initiated via an interfacial interaction and propagated through the birefringent material; the degree of birefringence observed is a product of the initial interfacial interaction (i.e. the angle of incidence) and the subsequent path length through the material.

The article may comprise packaging; that is in some embodiments the article may be constituted by the packaging that encases a product, whilst in other embodiments the article may be constituted by the product itself. The inventive concept may be applied to both situations.

The packaging may be substantially rigid or substantially flexible. The method is versatile in its suitability for different types of packaging and articles. It will be appreciated by the skilled person that the above-methods may be applied to articles having a variety of properties (in addition to those mentioned).

The film may be in the form of a label which may be applied to an article or product. A label is a convenient way of imparting information on the surface of the article or product. The label may be transparent. The code may be opaque. The code may, therefore, contrast with the remaining part of the label so that it may be readily scanned or imaged.

The code may represent details of the article such as its lot number, price, stock levels, and any other relevant information which will be apparent to the skilled person.

The code may be at least partly random or generated to be at least partly random. This improves the security provided to the article because to undertake the task of copying the code is made particularly burdensome. Further, it may become nearly impossible to predict the code if, for example, it is generated randomly by a computer. In some embodiments, a portion of the code may not be random. The code may be random, partially random or pseudo-random.

Something that is pseudo-random may be something that appears to be random but is not; typically this may be something that is generated by a complex algorithm that will generate identical number sequences each time that it is run and, therefore, values within the sequence can be predicted. Statistical analysis may show a pseudo-random sequence as being random. The security of a pseudo-random sequence generally relies entirely upon the complexity of the algorithm.

The code may be defined by impressions in the film. The impression may be created by a press or the like. This may involve the embossing or debossing of the film to impart the code thereon, or the ablation of material from the surface of the film. The impressions may be considered to be "pits" in the film. Hence, it could be said that the film is "pitted" or "fractured". The impressions may be constituted by indentations; that is the impressions do not extend entirely through the film. This may help preserve the structure and integrity of the film.

The code may be defined by perforations in the film. The perforations may be created by any suitable means, including a laser. The perforations (extending through the film) may improve the visibility of the code to a scanner, for example, so that the code can be more accurately identified.

The perforations or pits (impressions) may range from 2 to 100 microns in diameter, preferably 3 to 80 microns, more preferably 4 to 70 microns, even more preferably 5 to 60 microns, more preferably still 10 to 50 microns, and yet further preferably 20 to 40. In some embodiments, the perforations or pits may range from 2 to 5 microns. In other embodiments, the perforations may range from 20 to 100 microns. The microscopic or approaching-microscopic nature of the code may make it particularly difficult to reproduce illegitimately, thus adding to the security provided by the code. One advantage is that it may not be possible to create the code having perforations ranging from 2 to 100 microns using standard technology which is commonly available to the public. The perforations may be less than 100 microns in diameter. The perforations or pits may be effected by a laser; particularly a frequency-tripled neodymium-doped yttrium aluminium garnet (Nd:YAG) laser.

A focusing lens may be included and operable to adjust the diameter of the perforations or pits.

The perforations or pits may have random diameters. For example, randomness in the size of the holes or depressions can be achieved using a focusing lens with a depth of field comparable to the flutter of a polymer web at that point. This may vary from film to film, so selection of lenses will be reliant on the film in question and the extent to which it flutters.

The code may be integrated into the film. If the code is marked on the film in a way other than impressing or perforating, such as by printing for example, the bond of the code with the film may not be considered to be very intimate and may be susceptible to failure. If the code is impressed or perforated onto the film, it may be considered as being integrated in the film because it is formed integrally therewith. This may improve the longevity of the code on the film. In contrast to barcodes, for example, an integrated code may not be at risk of fading; particularly if the code is provided by perforations in the film.

The code may be operable to create a scattering effect when viewed by the naked eye. Being less visible to the naked eye may cause difficulty to a counterfeiter, for example, when attempting to imitate the code. The code may be invisible to the naked eye when viewed against a light (e.g. white) background. The code may be visible under a microscope with darkfield illumination, or in transmission, but may be invisible in reflection. The film itself may incorporate one or more fluorescent additives which allows the code to be clearly viewed under UV light, due to a light piping effect into pits/depressions.

The code may be machine-readable so that it can be detected in an efficient and accurate manner. The code may be readable using modest reading equipment.

An area of interest may be defined as a part of the film or article upon which the code may be superimposed so as to generate a distinctive image, which may be stored.

The area of interest may be defined by printing on the article (including packaging) or the film. Printing may be performed by any suitable means including a laser printer, for instance. By printing on the article itself, preservation of the area of interest may be improved.

The area of interest may be defined by printing a window on the article or the film. If such a window is marked on the film, when the film is placed against the article (during wrapping), the area of interest may be taken to be the combination of the printed window and the image appearing through the window. For example, if the text "paracetamol" appeared on the packaging of a pharmaceutical product, and the coded film bearing the printed window was placed over the packaging such that the window overlaid the letters "par" of "paracetamol", then the area of interest may be considered to be the combination of the printed window and the "par" text visible therethrough. Excessive printing on the article may thus be minimised since the part of the already-printed article may constitute the area of interest. Of course, in other embodiments, the printed window per se may be the area of interest.

The area of interest may be substantially in alignment with the marked code. To maximise efficiency, only those parts constituting the area of interest may be overlaid with the code of the film. More particularly, the entire film may not bear the code - only those parts which are intended to combine with the area of interest.

The area of interest may be defined by printing text on the article or the film. Such text may have the dual function of providing knowledge of the article to a consumer, for instance, and serving as an area of interest. Similarly, the area of interest may be defined by printing a graphic on the article or the film.

Many designs may be suitable for providing an area of interest. Depending on the location of the area of interest, for instance over the opening of a package, may improve its anti-tampering capabilities. The area of interest may be defined by printing on the article at least one of a square-face patch, a square-edge patch, a round-edge patch, a partial-fill patch, a corner patch, a band, an irregular-shaped band, a cross-tear tape patch, an entire-face patch, and an entire-article patch.

The area of interest may comprise a white or reflective background. This may improve visibility of the code due to the contrast with the background and the reduced effect of dust contamination so that accurate detection by a scanner, for example, may be enhanced.

The area of interest may be defined by printing directly on the article. Where an article, such as a bar of soap for example, is not packaged in a box, it may be advantageous to print the area of interest directly onto the article so that it may then be wrapped in the coded film. This may simplify the process and reduce undesirable costs and potential errors in the process.

The steps of imaging and storing may be performed electronically. The step of imaging may involve taking a photograph. The image may, therefore, accurately be acquired and reproduced for recognition. The information may be digital.

The article may be partly-wrapped in the film. This may reduce the material necessary for tracking and protecting an article. The article may be labelled with the film. Labelling may further reduce the material necessary for tracking and protecting an article. It may also make the tracking process more versatile and expedient.

The article may be shrink-wrapped in the film. Shrink-wrapping the film around the article before imaging the tracking zone may enhance the performance of the film to prevent tampering because the shrink film is held under tension by the shrink wrapped article. Removal of the article (to effect tampering) would cause the film to contract further and make it difficult to re-wrap or reinsert into the filmic wrap the tampered-with article.

The article may be combinable with existing tracking and security techniques such as barcodes and pressure-sensitive labels. The barcodes may constitute the area of interest which may be overlaid with the coded film. This may reduce any further printing on the article, which may be desirable for economic reasons.

The film may be polymeric which may be relatively inexpensive to produce.

The film may be substantially transparent. The code may, therefore, be readily visible to an imaging and scanning apparatus, for example.

The film may be doped with a taggant, such as a uv taggant, anti-stokes phosphor, magnetic taggant and a fluorescent taggant.

The code may be marked on the film by a frequency-tripled neodymium-doped yttrium aluminium garnet (Nd:YAG) laser. This is a non-standard laser not in common use except for specialised applications; thus enhancing its suitability and effectiveness for producing the code on the film.

The code may be marked on the film by a laser selected from a dye laser, DPSS laser, diode laser, Carbon Dioxide laser and UV laser.

The laser may be pulsed at approximately 100 to 150 kHz. This offers a rapid process by which to produce the pattern or code on the film.

CO₂ lasers are the most commonly used industrial laser materials processing laser sources. The lasers first came into large scale usage in the 1980s and have continuously improved and lowered in price ever since. The laser energy is generated by the RF excitation of a low pressure gas mixture composed mainly of helium nitrogen and carbon dioxide. The laser output wavelength is 10.6µm (mid-infrared) and laser sources are available at power outputs as high as 30kW. The advantages lie primarily in the cost, durability and reliability of the equipment and the relatively low level of eye hazard at this wavelength. However, the mid-infrared wavelength has two limitations: the infra-red photons are low in energy and are not capable of inducing photochemical activity and the long wavelength means that the focused spot sizes tend to be large relative to shorter wavelength lasers. Unlike with a frequency-tripled neodymium-doped yttrium aluminium garnet (Nd:YAG) laser, perforations or pits as small as 2 to 100 microns are, therefore, difficult to achieve with CO₂ lasers under commercial/industrial as opposed to laboratory conditions.

A DPSS (Diode Pumped Solid State) laser is a type of laser that consists of a solid crystal laser medium that is excited using a diode light source. The reason behind this is that the crystal media (commonly Nd:YAG) were formerly excited using xenon flash lamps which emit a broadband of radiation ranging from near-UV to near-IR; therefore, a broad band source is very inefficient (the output efficiency of an Nd:YAG laser was around 1%). Such inefficiency causes problems with waste heat which requires cooling and, therefore, the sizes and power levels of solid state laser technology were also limited. The broadband output from the lamps also generates secondary emissions, therefore reducing the quality of the output beam.

DPSS lasers come in a variety of forms which usually consist of a diode source exciting an Nd:YAG crystal (others are available) which produces an output beam of 1064nm (very near-IR); this can either be used directly or it can be fed into non-linear optical crystals that can either double, triple, quadruple, the wavelength depending on the type of crystal used (with loss in output power which becomes more prohibitive the shorter the wavelength reached).

DPSS lasers have recently become much more widely available for 1064nm IR and 532nm Green outputs, but are still relatively specialised for shorter wavelengths due to losses in efficiency and the more complex and specialised hardware needed.

The frequency-tripled Nd:YAG has an output wavelength of 355nm - in the near UV and is focusable down to spot sizes such as 5µm, but 20µm for a more robust process and can be used to cleanly mark BOPP film. In practice, it was found that clear film could not be cleanly marked using longer wavelength solid state lasers and that CO₂ lasers struggled to get below 100µm.

The frequency-tripled Nd:YAG is commercially available, but it is uncommon; a user is more likely to have a green beam DPSS or 1064nm Nd:YAG. There is an added advantage in that, upon examining the types of marks that can be generated, a knowledgeable person is likely to believe that they were made by a CO₂ laser and so will attempt to replicate them using this equipment - they will be unable to achieve the marking fidelity of the frequency-tripled Nd:YAG.

Alignment of the code (pits or perforations in the film, for example) to printed areas on the packaging may not be replicated once the pack is opened.

In an illustrative example of subject matter related to the present invention, there is provided a film marked with a code for tracking an article, the code comprising an at least partly random pattern of impressions or perforations.

In an illustrative example of subject matter related to the present invention, there is provided a film marked with a code for providing anti-counterfeit protection to an article, the code comprising an at least partly random pattern of impressions or perforations.

In an illustrative example of subject matter related to the present invention, there is provided a film marked with a code for protecting an article against tampering, the code comprising an at least partly random pattern of impressions or perforations.

In an illustrative example of subject matter related to the present invention, there is provided a web of film marked at intervals along the machine direction with a code.

The code may be marked discretely along the machine direction of the web. The code may differ along the machine direction of the web.

In an illustrative example of subject matter related to the present invention, there is provided a multiplicity of sheets of film severed from a web, wherein the multiplicity of sheets are marked along the machine direction with a code.

The code may be marked discretely along the machine direction of the sheets. The code may differ along the machine direction of the sheets.

The code may be of sufficient complexity to distinguish itself from a neighbouring code, for example.

In an illustrative example of subject matter related to the present invention, there is provided a method of marking randomly a code onto a film comprising the steps of:
- providing a film;
- providing a laser assembly comprising a laser for marking the film and two galvanometer mounted mirrors for directing the laser in an x and y direction; and
- driving the mirrors randomly by random current generation means.

A galvanometer is a device used for converting electrical current into mechanical motion and was frequently seen in devices such as electrical meters, pH meters and Geiger counters until the advent of digital technology - the electrical current flows through a coil which generates a magnetic field that twists the coil, pushing it against a spring which in turn moves a pointer. The movement of the pointer across a dial is relative to the amount of current supplied and, therefore, related to whatever generated that current; hence, its use as a form of meter for a variety of applications.

Galvanometers are used in a similar way for opto-mechanical purposes; instead of a needle, mirrors are mounted onto the rotary spring so that when a current is applied the mirror will rotate to a position relative to the magnitude of the current. In this fashion, mirrors can be rotated in a controlled fashion at potentially high speeds. Such galvanometer mounted mirrors are used to deflect laser beams to produce precisely controlled laser processing by acting as beam steering equipment.

The laser may be directed using two galvanometer mounted mirrors, which can steer it in the x and y direction; galvanometers are driven by a current - their rotary position is proportional to the current they are exposed to, so introducing a random current into the system will randomly move the galvanometers.

The film may be marked with a code using a random current generated by at least one of electrical noise, ambient noise obtained by a microphone, a random number generator, and converting the feed from a camera looking at a white background (the camera noise will be random). Other ways of creating a random current to create an at least partly random code may be possible.

It may be that it is the film itself that moves randomly during marking thereof to generate the at least partly random code. Of course, a random code may be effected by the combination of using a random current generator and moving the film in a concurrent fashion.

An illustrative example of subject matter related to the present invention envisages use of a frequency-tripled neodymium-doped yttrium aluminium garnet (Nd:YAG) laser in marking a code on a film, the code comprising an at least partly random pattern of impressions or perforations.

In an illustrative example of subject matter related to the present invention, there is provided a pharmaceutical product or the packaging thereof, wrapped in a film marked with a code, comprising a defined area of interest on the product, packaging or film, wherein the area of interest is substantially in alignment with the marked code.

Various embodiments of the present invention will now be described more particularly, by way of example only, with reference to the accompanying drawings, in which:
- Figure 1:: is a perspective view of a polymeric film;
- Figure 2:: is a perspective view of the film of Figure 1 marked with a code;
- Figure 3:: is a perspective view of the film of Figure 2 after splitting;
- Figure 4:: is a perspective view of an article wrapped with the film of Figure 3;
- Figure 5:: is a film formed according to an alternative embodiment of the present invention;
- Figure 6:: is a film formed according to further embodiment of the present invention;
- Figure 7:: is a plan view of an article wrapped in the film of Figure 5;
- Figure 8:: is a plan view of a different article bearing a barcode and wrapped in the film of Figure 5; and
- Figure 9:: is a perspective view of an article applied with coded films of various types.

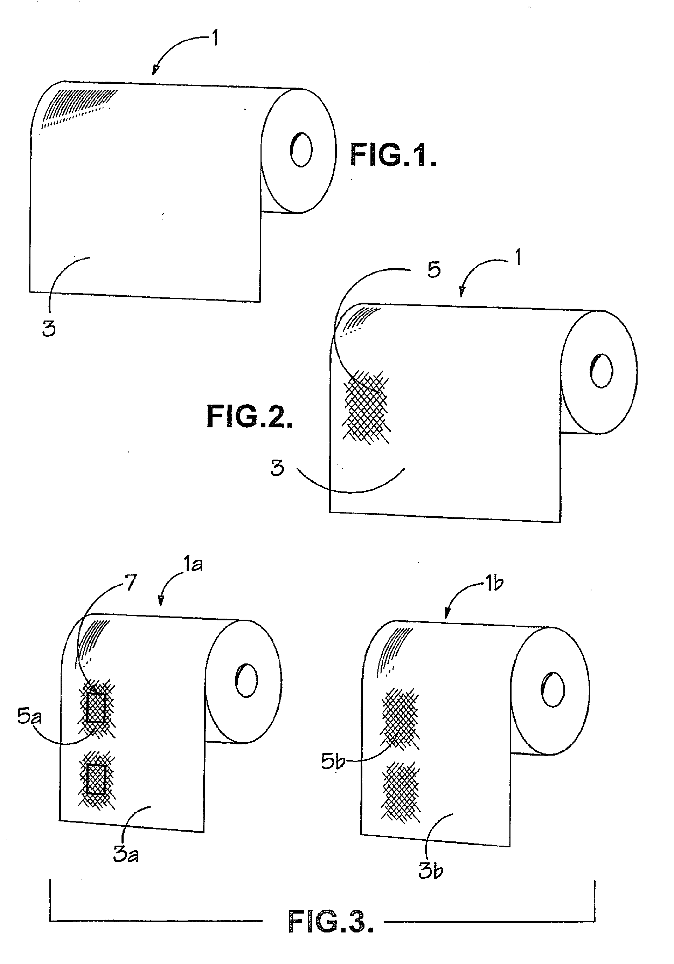

Referring to Figure 1, there is illustrated a cylindrical roll of polymeric film 1. The film 1 has a surface 3 for application of a code. The film 1 is transparent.

Figure 2 shows the film 1 of Figure 1 marked with a code 5 on surface 3. The code 5 is constituted by impressions 5 (in that the code is pitted into the surface 3 of the film 1) generated by a press or the like (not shown). In this way, the entire surface 3 of the film 1 is given an impressive code; although only a portion is shown impressed in Figure 2. Of course, in other embodiments, only a part of the film may be marked with a code (or "impressed"). The code 5 links and identifies all information needed (for example customer order number and production details) at the stage before it reaches the article.

With reference to Figure 3, there are depicted films 1a and 1b after "splitting" of the roll of film 1 of Figure 2. Using ink, windows 7 are printed on the surface 3a of film 1a. In this embodiment, the windows 7 are used to define the area of interest. The windows 7 are discrete and are spaced by 1 metre intervals, but it will be appreciated that in other embodiments the interval spacing may differ depending on the dimensions of the article to be wrapped by the film. By contrast, no windows are printed on film 1b.

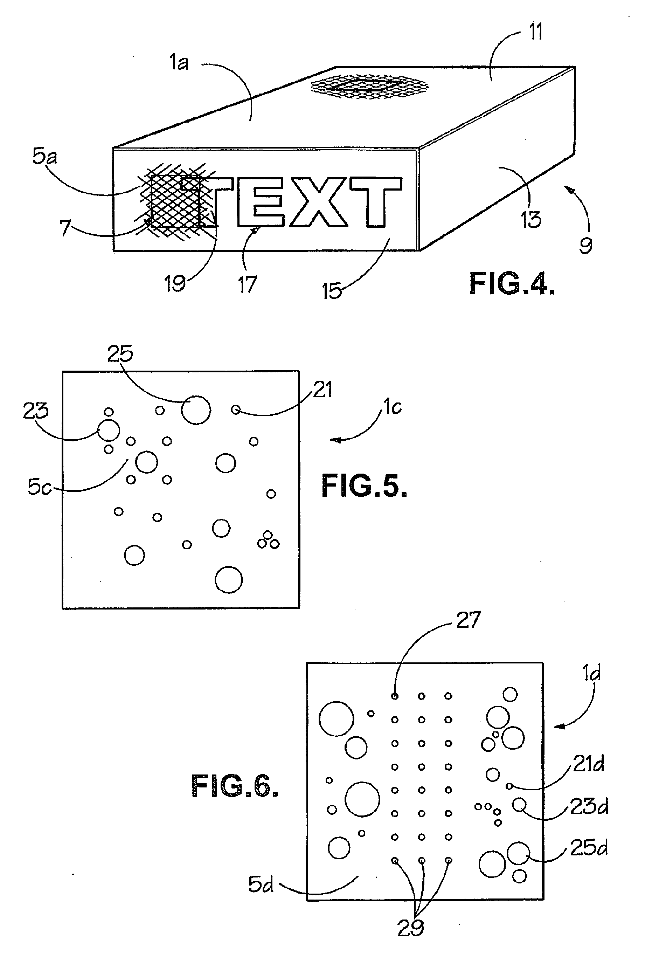

Figure 4 shows an article 9 provided in the form of a rigid medicament packaging 9. The packaging 9 generally has a parallelepiped shape having a top face 11, side face 13, and end face 15. On the end face 15 is printed "TEXT" 17. This "TEXT" 17 would, of course, normally indicate details of the contents of the packaging, but "TEXT" 17 here is shown for illustrative purposes so that the workings of the invention may be explained.

The packaging 9 is entirely wrapped in film 1a of Figure 3 bearing the impressed code 5a. Of course, in other embodiments, the packaging may only be partly wrapped. The window 7 partially superimposes the letter "T" 19 of the "TEXT" 17. The area of interest, therefore, comprises the printed window 7 and the portion of the "T" 19 visible through the window 7.

The area of interest, that is the window 7 and the portion of "T" 19, overlaid with the impressed code 5a defines a tracking zone, which tracking zone is imaged using a camera (not shown). The relationship between the area of interest and the code 5a is captured in the digital photograph and stored electronically so that it may later be relied upon to recognise a genuine or untampered article, or to track the article through a supply chain. If this relationship is later altered or misaligned illegitimately, it can be detected when the area of interest on the packaging 9 is again scanned and it does not match the stored digital photograph. To the unique stored image is attributed information such as the article lot no, stock level, and other product details for example. This information is used to track the article.

Referring now to Figure 5, there is illustrated an alternative embodiment of the film, generally indicated 1c. The film 1c is of clear polymeric bi-axially oriented polypropylene (BOPP) form and comprises a code 5c. In this embodiment, the code 5c is provided by a series of randomly sized perforations 21, 23 and 25 having diameters of 2, 50 and 100 microns, respectively. The code 5c is marked on the film 1 c by a frequency-tripled neodymium-doped yttrium aluminium garnet (Nd:YAG) laser (not shown), pulsed at approximately 150 kHz. The perforations 21, 23 and 25 have a very clear, cylindrical appearance when viewed under a microscope or magnifying lens, but cause a scattering effect when viewed with the naked eye which gives them the appearance of being larger than they are. The perforations 21, 23 and 25 are purposely drilled at diameters of 2-100µm so that the code is below the minimum practical focused spot size for a CO₂ laser. A focusing lens (not shown) is used to adjust the diameter of the perforations in a random manner. The code 5c is thus integrated into the film 1c.

The code 5c is random not only by way of the varying perforation sizes, but also by the random arrangement/pattern of the perforations 21, 23 and 25, as can be seen in Figure 5. The random pattern is generated by a laser assembly (not shown) comprising a laser for marking the film 1c and two galvanometer mounted mirrors for directing the laser in an x and y direction - the mirrors are driven randomly by random current generation means. The mirrors are mounted onto a rotary spring so that when a current is applied the mirror will rotate to a position relative to the magnitude of the current. The random current is generated by electrical noise. Of course, it will be understood that in other embodiments alternative ways of creating a random current may be employed.

Figure 6 shows another film 1d which is similar to that of Figure 5, except that its code 5d comprises a centrally-positioned non-random section represented by perforations 27 arranged in three equally spaced rows 29. On either side of the rows 29 is a random section constituted by differently-sized perforations 21 d, 23d and 25d. The code may, therefore, be considered pseudo-random.

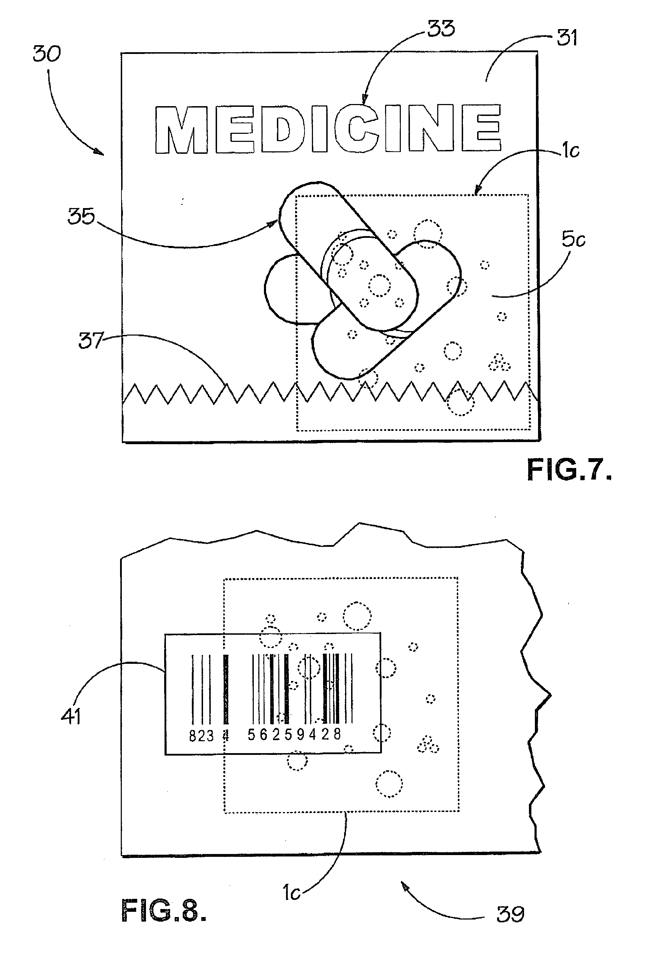

Referring now to Figure 7, there is illustrated a plan view of a medicine packet, generally indicated 30. Printed on its top face 31 is the word "MEDICINE" 33 and a graphic of three capsules 35. In this embodiment, the area of interest is represented by the graphic 35. The film 1 c of Figure 5 is used to partly-wrap the packet 30. The film 1 c is positioned over the majority of the graphic 35 so that the code 5c is scattered thereover. The film 1c and its code 5c are shown in dashed lines. The tracking zone, defined by the overlap between the code 5C and the area of interest (graphic 35) of the partly-wrapped packet 30, is imaged using a camera, and the image data is stored in an electronic database for identification of the packet 30 at a later date. If the packet 30 is then opened along its serrated edge 37, the film 1c (and consequently its code 5c) will have moved so as to alter its positional alignment with the area of interest (graphic 35). The altered alignment will not match with the stored image in the electronic database, and thus the genuine packet 30a may be distinguished from a fake medicine packet.

Figure 8 illustrates a cut-away view of an article generally indicated 39. The article 39 bears a barcode 41. In this embodiment, the barcode 41 represents the area of interest which is marked directly onto the article 39 - not its packaging, for example. The coded film 1c partly-wraps the article 39 in a similar fashion to that shown in Figure 7. Hence, the coded film 1c partly overlays the barcode. The function of the barcode 41 to track the article 39 can thus be combined with the function of the coded film 1c to provide security to the article 39.

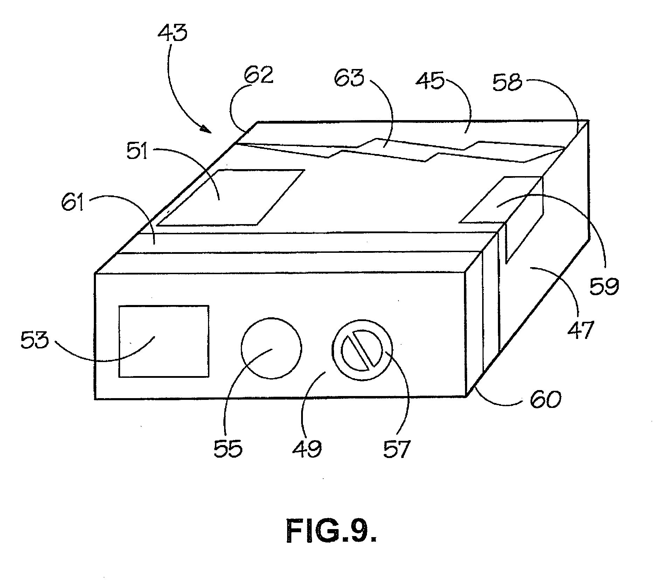

With reference to Figure 9, there is depicted a package 43 having the shape of a rectangular prism. The package 43 has a top face 45, side face 47, and end face 49. Figure 9 shows seven different types of areas of interest, each of which will have its own advantages. There are ten types of patch (three of which are not shown in Figure 9) that can be grouped into two distinct categories: non-functional, where the patch acts simply as a printed patch on a surface; or functional, where the patch cuts across features of the package involved in its opening.

### Non-functional:

1. Face square patch 51: The simplest patch located on the top face 45; the area is mathematically simple and so will be the easiest to capture, encode and store in a database.
2. Edge square patch 53: Again, a simple patch, but on the package end face 49. The distance to the corners for the edges are less than the face; therefore, we can expect less deformation of the printed area of interest below - this can be subdivided into four categories:
   a. Plain edge: no film features at this point.
   b. Adjacent seal edge: the area of interest is adjacent to a film seal; therefore, when the seal is broken so is the film at this point.
   c. Over seal edge: the area of interest is under the seal itself; therefore, two layers of film can be imaged.
   d. Fold edge: the area of interest is underneath a fold.
3. Round edge patch 55: located on end face 49. Geometrically, still simple, but a round patch would be more difficult for realignment of film afterwards as circles have no straight edges and are completely rotationally symmetrical.
4. Partial fill patch 57: located on the end face 49, and shaped like a "no-entry" sign in the UK Highway Code - that is a circle crossed with a line connecting diametrically opposed edges of the circle. In other embodiments, the patch can be any regular or irregular shape, but must be partially filled, i.e. contain areas within the outer perimeter that are areas of interest or not. This represents an increased level of complexity in both the imaging and also creates difficulty in any attempts to copy.

### Functional:

5. Corner patch 59: this area of interest covers two faces 45, 47 - in that the patch overlies the edge 58 connecting the top face 45 to side face 47; whilst at least twice as complex to image, it protects against the possibility that the edge 58 will be used for access to the package 43 either through a box flap-lid or through a deliberate cut.
6. Band 61: the banded area of interest runs all the way around the package 43 covering more surfaces and therefore protecting more of the package 43 including several edges 58, 60, 62 that could be used as points of access.
7. Jagged/Curved band 63: similar to band 61, but with an irregular shape.
8. Cross-tear tape patch (not shown): any of the above seven areas of interest that cut across a tear tape; the tear tape is the engineered method of gaining access to an overwrapped package 43 such as this and, therefore, any patch cutting across it would be severed.
9. Entire face detection (not shown): no printed pattern needed, protects a whole face. More of the overwrap is protected.
10.All over detection (not shown): area of interest is represented by the entire surface of the package 43, which is imaged; this has the advantages that any disruption destroys the pattern/code and no special print is needed.

A feature of the area of interest is that the film on top is likely to be dislodged relative to it upon opening; therefore, any feature that crosses an opening feature or covers larger areas of the package 43 has greater security.

## Claims

1. A method of tracking an article, of protecting an article against tampering, or of providing anti-counterfeit protection to a genuine article, comprising the steps of:
a. providing an article (9);
b. providing a transparent, polymeric film (1) for wrapping or labelling the article;
c. marking the film with a code (5);
d. defining an area of interest (7, 19) on the article or the film;
e. wrapping the article in the film or labelling the article with the film so that the code at least partially overlays the area of interest to define a tracking zone (5a, 7, 19) in the region of the at least partial overlay;
f. imaging the positional relationship between the code and the area of interest in the tracking zone of the wrapped or labelled article; and
g. storing the imaged data for tracking the article or storing the imaged data for recognition of the article in its untampered state, or storing the imaged data for recognition of the genuine article.

2. A method according to claim 1 wherein:
a. the steps of imaging and storing are performed electronically; and/or
b. the step of imaging involves taking a photograph; and/or
c. the area of interest (7, 19) is substantially in alignment with the marked code (5).

3. A method according to claim 1 or claim 2, including a step of measuring the birefringence of a core layer of the film (1), wherein the film is polymeric.

4. A method according to any one of Claims 1 to 3, wherein the article (9) comprises packaging, optionally wherein the packaging is substantially rigid or wherein the packaging is substantially flexible.

5. A method according to any one of Claims 1 to 4, wherein:
a. the area of interest (7, 19) is defined by printing on the article (9) or the film (1) and/or
b. the area of interest is defined by printing a window (7) on the article or the film; and/or
c. the area of interest is defined by printing text (17) on the article or the film; and/or
d. the area of interest is defined by printing a graphic (35) on the article or the film; and/or
e. the area of interest is defined by printing on the article at least one of a square-face patch (51), a square-edge patch (53), a round-edge patch (55), a partial-fill patch (57), a corner patch (59), a band (61), an irregular-shaped band (63), a cross-tear tape patch, an entire-face patch, and an entire-article patch; and/or
f. the area of interest comprises a white or reflective background; and/or
g. the area of interest is defined by printing directly on the article.

6. A method according to any one of Claims 1 to 5, wherein the article (9) is partly wrapped in the film (1), optionally wherein the article is shrink-wrapped in the film.

7. A method according to any one of Claims 1 to 6, conducted in combination with alternative marking techniques, optionally barcodes (41).

8. A method according to any one of Claims 1 to 7 wherein
a. the code (5) is at least partly random; and/or
b. the code is at random, partially random or pseudo-random; and/or
c. the code is defined by impressions (5a, 5b, 5c, 5d) in the film; and/or
d. the code is defined by perforations (21, 23, 25, 27) in the film.

9. The method of any of Claims 1 to 8, wherein:
a. the code (5) is marked on the film by a frequency-tripled neodymium-doped yttrium aluminium garnet (Nd:YAG) laser; and/or
b. the code is marked on the film by a laser selected from a dye laser, DPSS laser, diode laser, Carbon Dioxide laser and UV laser.

10. A method according to any one of claims 1 to 9 wherein:
a. the perforations (21, 23, 25, 27) or impressions (5a, 5b, 5c, 5d) range from 2 to 100 microns in diameter; and/or
b. the perforations or impressions range from 2 to 5 microns in diameter; and/or
c. the perforations or impressions range from 20 to 100 microns in diameter.

11. A method according to claim 10 wherein the perforations (21, 23, 25, 27) or impressions (5a, 5b, 5c, 5d) have random diameters.

12. A method according to any one of claims 1 to 11 wherein:
a. the film (1) is doped with a taggant, optionally wherein the taggant is selected from uv taggant, anti-stokes phosphor, magnetic taggant and a fluorescent taggant.

13. A method according to any one of claims 1 to 12 wherein:
a. the code (5) is integrated into the film (1); and/or
b. the code is operable to create a scattering effect when viewed by the naked eye; and/or
c. the code is machine-readable.

14. A method according to any one of claims 1 to 13 wherein:
a. the film (1) is marked using a random current generated by at least one of electrical noise, ambient noise obtained by a microphone, a random number generator, and converting the feed from a camera looking at a white background.

## Patentansprüche

1. Verfahren zum Verfolgen eines Artikels, zum Schützen eines Artikels gegen Manipulation oder zum Bereitstellen von Antifälschungsschutz für einen echten Artikel, umfassend folgende Schritte:
a. Bereitstellen eines Artikels (9);
b. Bereitstellen einer transparenten Polymerfolie (1) zum Einwickeln oder Etikettieren des Artikels;
c. Markieren der Folie mit einem Code (5);
d. Definieren eines Bereichs von Interesse (7, 19) auf dem Artikel oder der Folie;
e. Einwickeln des Artikels in der Folie oder Kennzeichnen des Artikels mit der Folie, so dass der Code mindestens teilweise den Bereich von Interesse überdeckt, um eine Verfolgungszone (5a, 7, 19) in der Region der mindestens teilweisen Überdeckung zu definieren;
f. Abbilden des Lagebeziehung zwischen dem Code und dem Bereich von Interesse in der Verfolgungszone des eingewickelten oder gekennzeichneten Artikels; und
g. Speichern der abgebildeten Daten zum Verfolgen des Artikels oder Speichern der abgebildeten Daten zum Erkennen des Artikels in seinem unmanipulierten Zustand oder Speichern der abgebildeten Daten zum Erkennen des echten Artikels.

2. Verfahren nach Anspruch 1, wobei:
a. die Schritte des Abbildens und Speicherns elektronisch ausgeführt werden; und/oder
b. der Schritt des Abbildens das Fotografieren umfasst; und/oder
c. der Bereich von Interesse (7, 19) im Wesentlichen mit dem markierten Code (5) ausgerichtet ist.

3. Verfahren nach Anspruch 1 oder Anspruch 2, umfassend einen Schritt des Messens der Doppelbrechung einer Kemschicht der Folie (1), wobei die Folie polymer ist.

4. Verfahren nach einem der Ansprüche 1 bis 3, wobei der Artikel (9) Verpackung umfasst, wobei optional die Verpackung im Wesentlichen starr ist oder wobei die Verpackung im Wesentlichen biegsam ist.

5. Verfahren nach einem der Ansprüche 1 bis 4, wobei:
a. der Bereich von Interesse (7, 19) durch Drucken auf den Artikel (9) oder die Folie (1) definiert wird; und/oder
b. der Bereich von Interesse durch Drucken eines Fensters (7) auf den Artikel oder die Folie definiert wird; und/oder
c. der Bereich von Interesse durch Drucken von Text (17) auf den Artikel oder die Folie definiert wird; und/oder
d. der Bereich von Interesse durch Drucken einer Grafik (35) auf den Artikel oder die Folie definiert wird; und/oder
e. der Bereich von Interesse durch Drucken von mindestens einem der Folgenden auf den Artikel definiert wird: ein quadratischer Seitenflächenfleck (51), ein quadratischer Randfleck (53), ein runder Randfleck (55), ein teilweise ausgefüllter Fleck (57), ein Eckfleck (59), ein Streifen (61), ein unregelmäßig geformter Streifen (63), ein Fleck über einem Reißband, ein eine ganze Seitenfläche bedeckender Fleck und ein den ganzen Artikel bedeckenden Fleck; und/oder
f. der Bereich von Interesse einen weißen oder reflektierenden Hintergrund umfasst; und/oder
g. der Bereich von Interesse durch direktes Drucken auf den Artikel definiert wird.

6. Verfahren nach einem der Ansprüche 1 bis 5, wobei der Artikel (9) teilweise in der Folie (1) eingewickelt ist, wobei optional der Artikel in der Folie eingeschrumpft ist.

7. Verfahren nach einem der Ansprüche 1 bis 6, ausgeführt in Kombination mit alternativen Markierungstechniken, optional Barcodes (41).

8. Verfahren nach einem der Ansprüche 1 bis 7, wobei:
a. der Code (5) mindestens teilweise zufällig ist; und/oder
b. der Code zufällig, teilweise zufällig oder pseudozufällig ist; und/oder
c. der Code durch Eindrücke (5a, 5b, 5c, 5d) in der Folie definiert wird; und/oder
d. der Code durch Perforationen (21, 23, 25, 27) in der Folie definiert wird.

9. Verfahren nach einem der Ansprüche 1 bis 8, wobei:
a. der Code (5) durch einen frequenzverdreifachten Neodym-dotierten Yttrium-Aluminium-Granat(Nd:YAG)-Laser auf der Folie markiert wird; und/oder
b. der Code durch einen Laser auf der Folie markiert wird, der ausgewählt ist aus: einem Farbstofflaser, DPSS-Laser, Diodenlaser, Kohlendioxidlaser und UV-Laser.

10. Verfahren nach einem der Ansprüche 1 bis 9, wobei:
a. die Perforationen (21, 23, 25, 27) oder Eindrücke (5a, 5b, 5c, 5d) einen Durchmesser im Bereich von 2 bis 100 Mikrometer aufweisen; und/oder
b. die Perforationen oder Eindrücke einen Durchmesser im Bereich von 2 bis 5 Mikrometer aufweisen; und/oder
c. die Perforationen oder Eindrücke einen Durchmesser im Bereich von 20 bis 100 Mikrometer aufweisen.

11. Verfahren nach Anspruch 10, wobei die Perforationen (21, 23, 25, 27) oder Eindrücke (5a, 5b, 5c, 5d) zufällige Durchmesser aufweisen.

12. Verfahren nach einem der Ansprüche 1 bis 11, wobei:
a. die Folie (1) mit einem Taggant dotiert ist, wobei optional der Taggant ausgewählt ist aus UV-Taggant, Anti-Stokes-Phosphor, magnetischem Taggant und einem fluoreszierenden Taggant.

13. Verfahren nach einem der Ansprüche 1 bis 12, wobei:
a. der Code (5) in die Folie (1) integriert ist; und/oder
b. der Code wirksam ist, um einen Streueffekt zu erzeugen, wenn er mit bloßem Auge betrachtet wird; und/oder
c. der Code maschinenlesbar ist.

14. Verfahren nach einem der Ansprüche 1 bis 13, wobei:
a. die Folie (1) unter Verwendung eines zufälligen Stroms markiert wird, der durch mindestens eines der Folgenden erzeugt wird: elektrisches Rauschen, durch ein Mikrofon erhaltenes Umgebungsrauschen, einen Zufallszahlengenerator und Umwandeln der Eingabe von einer auf einen weißen Hintergrund gerichteten Kamera.

## Revendications

1. Un procédé de suivi d'un article, de protection d'un article contre une altération ou de fourniture d'une protection anti-contrefaçon à un article authentique, comprenant les opérations suivantes :
a. la fourniture d'un article (9),
b. la fourniture d'un film polymère transparent (1) destiné à l'emballage ou à l'étiquetage de l'article,
c. le marquage du film avec un code (5),
d. la définition d'une zone d'intérêt (7, 19) sur l'article ou le film,
e. l'emballage de l'article dans le film ou l'étiquetage de l'article avec le film de sorte que le code recouvre au moins partiellement la zone d'intérêt de façon à définir une zone de suivi (5a, 7, 19) dans la zone du recouvrement au moins partiel,
f. la mise en image de la relation de position entre le code et la zone d'intérêt dans la zone de suivi de l'article emballé ou étiqueté, et
g. la conservation en mémoire des données mises en image pour le suivi de l'article ou la conservation en mémoire des données mises en image pour la reconnaissance de l'article dans son état non altéré, ou la conservation en mémoire des données mises en image pour la reconnaissance de l'article authentique.

2. Un procédé selon la Revendication 1 où :
a. les opérations de mise en image et de conservation en mémoire sont exécutées électroniquement, et/ou
b. l'opération de mise en image implique la prise d'une photographie, et/ou
c. la zone d'intérêt (7, 19) est sensiblement en alignement avec le code marqué (5).

3. Un procédé selon la Revendication 1 ou 2, comprenant une opération de mesure de la biréfringence d'une couche noyau du film (1), où le film est polymère.

4. Un procédé selon l'une quelconque des Revendications 1 à 3, où l'article (9) comprend un conditionnement, éventuellement où le conditionnement est sensiblement rigide ou où le conditionnement est sensiblement souple.

5. Un procédé selon l'une quelconque des Revendications 1 à 4, où :
a. la zone d'intérêt (7, 19) est définie par une impression sur l'article (9) ou le film (1) et/ou
b. la zone d'intérêt est définie par l'impression d'une fenêtre (7) sur l'article ou le film, et/ou
c. la zone d'intérêt est définie par l'impression d'un texte (17) sur l'article ou le film, et/ou
d. la zone d'intérêt est définie par l'impression d'un graphisme (35) sur l'article ou le film, et/ou
e. la zone d'intérêt est définie par l'impression sur l'article d'au moins un élément parmi un timbre à face carrée (51), un timbre à bord carré (53), un timbre à bord rond (55), un timbre à remplissage partiel (57), un timbre d'angle (59), une bande (61), une bande de forme irrégulière (63), un timbre à bande à déchirure transversale, un timbre de face entière et un timbre d'article entier, et/ou
f. la zone d'intérêt comprend un fond blanc ou réfléchissant, et/ou
g. la zone d'intérêt est définie par une impression directe sur l'article.

6. Un procédé selon l'une quelconque des Revendications 1 à 5, où l'article (9) est partiellement emballé dans le film (1), éventuellement où l'article est emballé sous film rétractable dans le film.

7. Un procédé selon l'une quelconque des Revendications 1 à 6, exécuté en combinaison avec d'autres techniques de marquage, éventuellement des codes à barres (41).

8. Un procédé selon l'une quelconque des Revendications 1 à 7, où
a. le code (5) est au moins partiellement aléatoire, et/ou
b. le code est aléatoire, partiellement aléatoire ou pseudo-aléatoire, et/ou
c. le code est défini par des impressions (5a, 5b, 5c, 5d) dans le film, et/ou
d. le code est défini par des perforations (21, 23, 25, 27) dans le film.

9. Le procédé selon l'une quelconque des Revendications 1 à 8, où :
a. le code (5) est marqué sur le film par un laser à cristaux de grenat yttrium aluminium dopé au néodyme à fréquence triplée (Nd: YAG), et/ou
b. le code est marqué sur le film par un laser sélectionné parmi un laser à colorants, un laser DPSS, un laser à diode, un laser à dioxyde de carbone et un laser ultraviolet.

10. Un procédé selon l'une quelconque des Revendications 1 à 9 où :
a. les perforations (21, 23, 25, 27) ou impressions (5a, 5b, 5c, 5d) se situent dans une plage allant de 2 à 100 microns de diamètre, et/ou
b. les perforations ou impressions se situent dans une plage allant de 2 à 5 microns de diamètre, et/ou
c. les perforations ou impressions se situent dans une plage allant de 20 à 100 microns de diamètre.

11. Un procédé selon la Revendication 10 où les perforations (21, 23, 25, 27) ou impressions (5a, 5b, 5c, 5d) possèdent des diamètres aléatoires.

12. Un procédé selon l'une quelconque des Revendications 1 à 11 où :
a. le film (1) est dopé avec un traceur, éventuellement où le traceur est sélectionné parmi un traceur ultraviolet, un phosphore anti-stokes, un traceur magnétique et un traceur fluorescent.

13. Un procédé selon l'une quelconque des Revendications 1 à 12 où :
a. le code (5) est intégré au film (1), et/ou
b. le code est conçu de façon à créer un effet de diffusion lorsqu'il est observé à l'oeil nu, et/ou
c. le code est lisible par ordinateur.

14. Un procédé selon l'une quelconque des Revendications 1 à 13 où :
a. le film (1) est marqué au moyen d'un courant aléatoire généré par au moins un élément parmi un bruit électrique, un bruit ambiant obtenu par un microphone, un générateur de nombres aléatoires, et la conversion du signal provenant d'une caméra regardant un fond blanc.
